(19)

Europäisches Patentamt

European Patent Office

Office européen des brevets

(11) **EP 4 597 195 A1**

(12) **EUROPEAN PATENT APPLICATION**

(43) Date of publication:
06.08.2025 Bulletin 2025/32

(21) Application number: 25154079.5

(22) Date of filing: 27.01.2025

(51) International Patent Classification (IPC):
*G02B 21/00* (2006.01)

(52) Cooperative Patent Classification (CPC):
G02B 21/0092

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 29.01.2024 US 202463626340 P

(71) Applicant: **Wise Device Inc.**
Richmond Hill, Ontario L4B 1L2 (CA)

(72) Inventors:
• **LOPATIN, Aleksey**
Markham, L6E 1Z5 (CA)
• **RENAUD, Alexis Davy Jean-Yves**
86000 Poitiers (FR)

(74) Representative: **Mathys & Squire**
**The Shard**
**32 London Bridge Street**
**London SE1 9SG (GB)**

(54) **A SCANNING REFLECTIVE BRIGHT FIELD MICROSCOPE**

(57)    A scanning reflective bright field microscope for inspection of a specimen is provided. The microscope may include multiple light emitting diodes (LEDs); a light combiner to combine light output of the multiple LEDs; a polarizer to receive and split the light output from the light combiner into two polarized portions, so that a first portion of the polarized light is directed towards the specimen; and a retarder and a sensor coupling filter to receive the first portion of the polarized light and convert the first portion of the polarized light into circularly polarized light directed towards the specimen, and the retarder and the sensor coupling filter converts circularly polarized reflected light from the specimen into linearly polarized light that is directed towards an imaging system.

FIG. 3

EP 4 597 195 A1

**Description**

**CROSS-REFERENCE TO RELATED APPLICATION**

This application claims the benefit of United States Provisional Patent Application No. 63/626,340 filed Jan. 29, 2024, and the entire contents of United States Provisional Patent Application No. 63/626,340 are hereby incorporated herein in their entirety.

**FIELD**

This document generally relates to a microscope for inspection of a specimen, and specifically to a scanning reflective bright field (RBF) microscope.

**BACKGROUND**

RBF modality is a powerful tool that is widely used in modern microscopy for specimen inspections. The RBF modality is well-suited for inspection of optically non-transparent specimens. Light from an illuminator is guided through a microscope objective and is incident on the specimen. Reflected light from the specimen passes through the objective lens and can be observed via the microscope oculars or an imaging system attached to the microscope.

The RBF modality does not require positioning of any microscope components under the specimen. This can provide an advantage compared with other modalities that require additional microscope components positioned under the specimen. The RBF modality is utilized in a broad range of industrial microscopy applications (e.g., flat panel display production, bio-medical instruments etc.).

Industrial microscopy applications typically require high inspections speeds (i.e., short inspection times). High inspection speeds can be achieved by providing relative movement between the microscope and the inspected specimen. A scanning microscopy approach can minimize the specimen and/or microscope acceleration/deceleration times during the relative movement. This can enable the scanning microscopy approach to eliminate settling and stop times between consecutive image acquisitions during a specimen inspection process.

**SUMMARY**

The following summary is provided to introduce the reader to the more detailed discussion to follow. The summary is not intended to limit or define any claimed or as yet unclaimed invention. One or more inventions may reside in any combination or subcombination of the elements or process steps disclosed in any part of this document including its claims and figures.

According to some aspects, a scanning reflective bright field microscope for inspection of a specimen is provided. The microscope may include multiple light emitting diodes (LEDs); a light combiner to combine light output of the multiple LEDs; a polarizer to receive and split the light output from the light combiner into two polarized portions, so that a first portion of the polarized light is directed towards the specimen; and a retarder and a sensor coupling filter to receive the first portion of the polarized light and convert the first portion of the polarized light into circularly polarized light directed towards the specimen, and the retarder and the sensor coupling filter converts circularly polarized reflected light from the specimen into linearly polarized light that is directed towards an imaging system.

**BRIEF DESCRIPTION OF THE DRAWINGS**

The drawings included herewith are for illustrating various examples of articles, methods, and apparatuses of the present specification and are not intended to limit the scope of what is taught in any way. In the drawings:

FIG. 1 is a schematic diagram of a scanning RBF microscope that uses a Xe strobe lamp illuminator.

FIG. 2 is a schematic diagram of a scanning RBF microscope that uses an illuminator having multiple LEDs.

FIG. 3 is a schematic diagram of a scanning RBF microscope, in accordance with an embodiment.

FIG. 4A is a schematic diagram of an example light combiner that can be used in the scanning RBF microscope of FIG. 3.

FIG. 4B is a schematic diagram of another example light combiner that can be used in the scanning RBF microscope of FIG. 3.

FIG. 5A is a schematic diagram of another example light combiner that can be used in the scanning RBF microscope of FIG. 3.

FIG. 5B is a schematic diagram of another example light combiner that can be used in the scanning RBF microscope of FIG. 3.

FIG. 6 is a schematic diagram of another example light combiner that can be used in the scanning RBF microscope of FIG. 3.

FIG. 7 shows an intensity graph of an example LED emission light pulse.

FIG. 8 shows an intensity graph of another example LED emission light pulse, an example LED driver signal timing graph, and an example global shutter operation timing graph, in accordance with an embodiment.

FIG. 9 shows an intensity graph of another example LED emission light pulse, another example LED driver signal timing graph, and another example global shutter operation timing graph, in accordance with an embodiment.

FIGS. 10A and 10B show images of a defective liquid crystal display (LCD) thin film transistor (TFT) array acquired using an example embodiment of the disclosed scanning RBF microscope.

FIG. 11A is a graph showing spectral transmission characteristics of example dichroic coatings of a light combiner of the scanning RBF microscope of FIGS. 10A and 10B.

FIG. 11B is a graph showing combined emission spectrum of example red, green and blue LEDs of the light combiner of FIG. 11A.

## DETAILED DESCRIPTION

Numerous embodiments are described in this application and are presented for illustrative purposes only. The described embodiments are not intended to be limiting in any sense. The invention is widely applicable to numerous embodiments, as is readily apparent from the disclosure herein. Those skilled in the art will recognize that the present invention may be practiced with modification and alteration without departing from the teachings disclosed herein. Although particular features of the present invention may be described with reference to one or more particular embodiments or figures, it should be understood that such features are not limited to usage in the one or more particular embodiments or figures with reference to which they are described.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

**As** used herein and in the claims, two or more parts are said to be "coupled", "connected", "attached", "joined", "affixed", or "fastened" where the parts are joined or operate together either directly or indirectly (i.e., through one or more intermediate parts), so long as a link occurs. As used herein and in the claims, two or more parts are said to be "directly coupled", "directly connected", "directly attached", "directly joined", "directly affixed", or "directly fastened" where the parts are connected in physical contact with each other. As used herein, two or more parts are said to be "rigidly coupled", "rigidly connected", "rigidly attached", "rigidly joined", "rigidly affixed", or "rigidly fastened" where the parts are coupled so as to move as one while maintaining a constant orientation relative to each other. None of the terms "coupled", "connected", "attached", "joined", "affixed", and "fastened" distinguish the manner in which two or more parts are joined together.

Further, although method steps may be described (in the disclosure and / or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

**As** used herein and in the claims, a group of elements are said to 'collectively' perform an act where that act is performed by any one of the elements in the group, or performed cooperatively by two or more (or all) elements in the group.

As used herein and in the claims, a first element is said to be "received" in a second element where at least a portion of the first element is received in the second element unless specifically stated otherwise.

Some elements herein may be identified by a part number, which is composed of a base number followed by an alphabetical or subscript-numerical suffix (e.g., 112a, or $112_1$). Multiple elements herein may be identified by part numbers that share a base number in common and that differ by their suffixes (e.g., $112_1$, $112_2$, and $112_3$). All elements with a common base number may be referred to collectively or generically using the base number without a suffix (e.g., 112).

As used herein and in the claims, "up", "down", "above", "below", "upwardly", "vertical", "elevation" and similar terms are in reference to a directionality generally aligned with (e.g., parallel to) gravity. However, none of the terms referred to in this paragraph imply any particular alignment between elements. For example, a first element may be said to be "vertically above" a second element, where the first element is at a higher elevation than the second element, and irrespective of whether the first element is vertically aligned with the second element.

A scanning RBF microscope may be implemented using an area scan imaging system working in conjunction with a strobe light illuminator. The illuminator must provide light pulses with a sufficiently high intensity to enable acquisition of microscope images with sufficient brightness. Medium-power arc guided Xe strobe lamps with discharge energy E > 160 mJ per flash can create sufficiently intense visible wavelength range (400-700nm) light pulses for typical scanning RBF microscope applications.

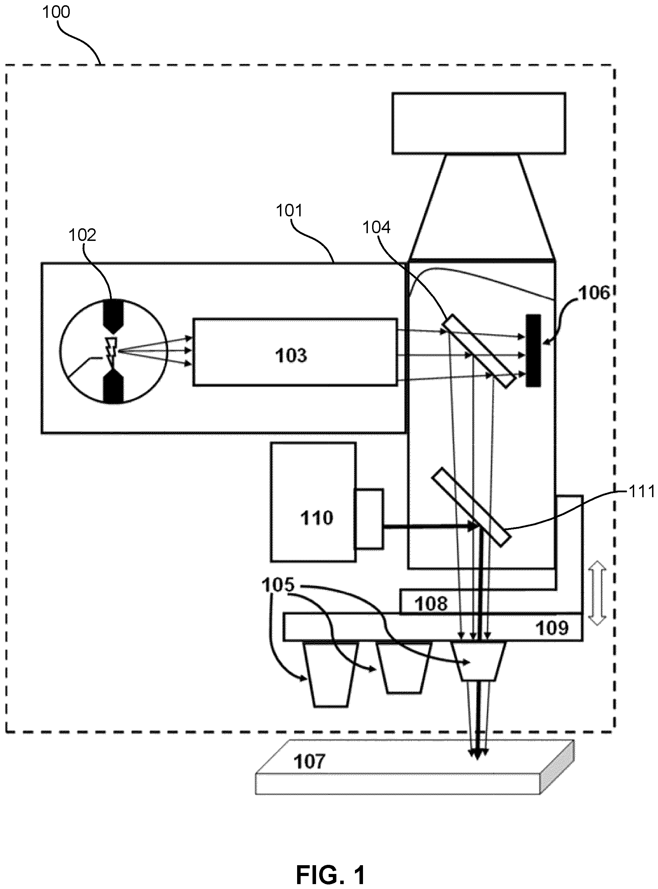

Reference is now made to FIG. 1 showing a schematic diagram of a scanning RBF microscope 100 that uses a Xe strobe lamp illuminator for inspection of a specimen 107. Scanning RBF microscope 100 includes an illuminator 101, a beamsplitter 104, a microscope objective 105, a light absorber 106, an actuator 108, a lens changer 109, a sensor 110 and a sensor coupling filter 111.

Illuminator 101 includes a medium-power arc guided Xe strobe lamp 102 and an optical assembly 103. Light from lamp 102 is collected, homogenized and focused using optical assembly 103. The light output from optical assembly 103 is partially reflected by light-coupling plate beamsplitter 104 towards microscope objective 105. Plate beamsplitters with light splitting ratio 50T/50R (50% of light is transmitted and 50% of light is reflected) can be optimal for RBF modality. The transmitted portion of light passes straight through beamsplitter 104 and can be absorbed by light absorber 106. The reflected portion of light passes through microscope objective 105 and illuminates specimen 107.

Kohler illumination for the microscope RBF modality is created by designing optical assembly 103 such that it creates expanded Xe lamp 102 arc image in the back focal plane of microscope objective 105. High numerical aperture anamorphic and isomorphic magnifiers, light homogenizers and diffusers can be used in optical assembly 103 to create expanded Xe lamp 102 arc image in the back focal plane of microscope objective 105.

Microscope 100 can enable scanning mode operation by using autofocusing techniques instead of using manual focusing techniques. Multiple microscope objectives 105 can be attached to actuator 108 using lens changer 109 (linear or rotary). All microscope objectives 105 may be infinity corrected. To always keep the microscope in focus during scanning operation, the structured light through-the-lens autofocus sensor 110 is coupled to microscope 100 via plate sensor coupling filter 111. Sensor 110 determines the microscope's best focus position and sends a signal to the actuator 108 if a vertical position adjustment is required for objective 105.

Illuminator 101 of microscope 100 can require frequent Xe lamp replacements that can limit availability of microscope 100 for specimen inspections. For example, the total number of flashes provided by a typical medium-power arc guided Xe strobe lamp does not exceed N = 1.0E+09. For a microscope image acquisition framerate of F=150 fps, this translates into less than three months of service lifetime after which the Xe lamp must be replaced. Additionally, if the Xe lamp is operated at a limit of its discharge energy capability, the service lifetime may be an order of magnitude shorter.

Light emitting diodes (LEDs) may be used as an alternative to arc guided Xe lamps for a broad range of scanning RBF microscope applications in the visible wavelength range. LEDs can have a service lifetime of ~ 40,000 hours or more for constant current mode operation. For pulse mode operation having a duty cycle D~0.1% or less, the LEDs can have a significantly longer lifetime. However, replacing an arc guided Xe lamp in the illuminator with a single white LED can have an approximately 6-7-fold microscope object plane illuminance deficit, thereby preventing high-quality inspection of typical specimens. The illuminance deficit may be reduced to an approximately 2-fold deficit by using an illuminator that includes multiple LEDs.

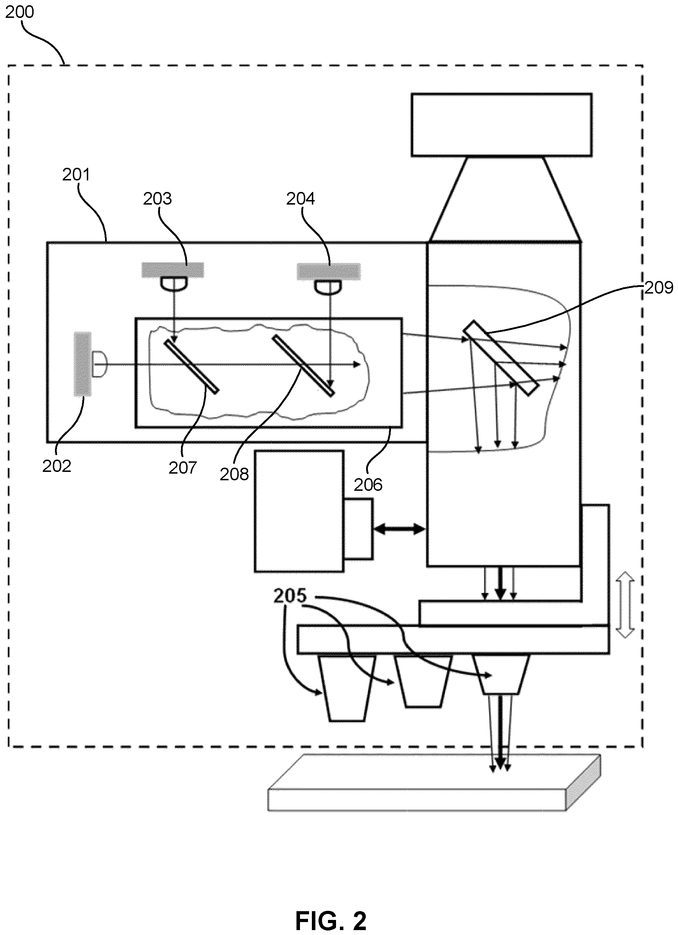

Reference is now made to FIG. 2 showing a schematic diagram of a scanning RBF microscope 200 that uses an illuminator having multiple LEDs. Scanning RBF microscope 200 includes an illuminator 201, a beamsplitter 209, and a microscope objective 205. Microscope 200 may further include a light absorber, an actuator, a lens changer, a sensor and a sensor coupling filter, as described above with reference to microscope 100.

Illuminator 201 includes multiple LEDs, for example, LEDs 202, 203 and 204 having emissions in the red, green and blue light spectral ranges. Light emitted by the LEDs is collected and focused using optical assembly 206. Plate beamsplitter 209 directs a portion of this light towards microscope objective 205. Assembly 206 includes at least two plate dichroic mirrors 207 and 208. Dichroic mirrors 207 and 208 are selected such that they substantially reflect all light for certain spectral ranges and substantially transmit all light for other spectral ranges. Assembly 206 enables combination of red, green and blue light to emulate quasi-white light illumination with a required combined 400-700 nm spectral range in the microscope object plane.

Illuminator 201 can enable the illuminance deficit to be reduced from an approximately 6-7-fold deficit to an approximately 2-fold deficit (in comparison with illuminator 101). However, this illuminance level may not be sufficient for high-quality inspection of typical specimens.

The gain of the imaging system may be increased to compensate for the illuminance deficit of illuminator 201. However, the charge-coupled device (CCD) or complementary metal-oxide semiconductor (CMOS) chips typically used in imaging systems of scanning RBF microscopes have small pixel sizes and consequently small signal-to-noise (SNR) ratios. For example, the SNR ratio for a global shutter CCD/CMOS chip with pixel size of p=2.5 $\mu$m typically does not exceed 40dB. Consequently, increased gains can result in noisy images.

Described herein is a scanning RBF microscope that can address the challenges associated with the frequent Xe lamp replacements of microscope 100 and the illuminance deficit challenges of microscope 200. The disclosed scanning RBF microscope includes multiple LED light sources and does not use a Xe lamp. This can eliminate the problems associated with frequent Xe lamp replacements of microscope 100. Further, the disclosed scanning RBF microscope includes a light combiner, a polarizer, a retarder and a sensor coupling filter that work in combination (as described herein) to overcome the illuminance deficit challenges of microscope 200. The disclosed scanning RBF microscope may further include a control system that is configured to optimize microscope image intensity by synchronizing control signals provided to the multiple LEDs with shutter control signals provided to an imaging system of the microscope.

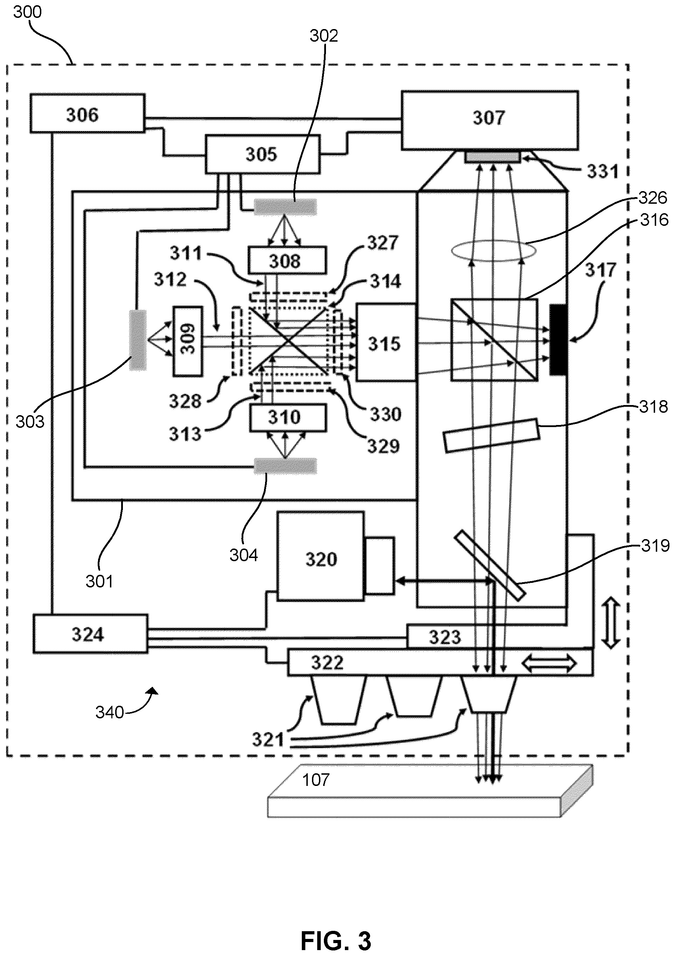

Reference is now made to FIG. 3 showing a schematic diagram of a scanning RBF microscope 300, in accordance with a disclosed embodiment. Microscope 300 includes an illuminator 301, a polarizer 316, an absorber 317, a retarder 318, a sensor coupling filter 319, one or more objective lenses 321, an autofocus system 340, a tube lens 326, an imaging system 307, a LED driver 305 and a control system 306. In the illustrated example, microscope 300 includes multiple objective lenses 321 and a lens changer 322 to change between multiple objective lenses 321.

Illuminator 301 may include any suitable number of LEDs, a light combiner 314 to combine the light output of the LEDs, and a focusing assembly 315. In the illustrated example, illuminator 301 includes three LEDs - 302, 303 and 304. In other examples, illuminator 301 may include two LEDs or greater than three LEDs. A larger number of LEDs can provide greater illuminance intensity but can increase the size and/or cost of illuminator 301.

Each of LEDs 302, 303 and 304 can emit light in a corresponding spectral range. The light output from light combiner 314 may include at least a portion of 400-700nm wavelength range. A combination of the spectral ranges of LEDs 302, 303 and 304 may cover a substantial portion of the visible wavelength range. In some embodiments, the spectral range of LEDs 302, 303 and 304 may not include any overlapping portions. In other embodiments, there may be an overlapping portion between the spectral range of LEDs 302, 303 and/or 304.

Light combiner 314 may include any suitable design based on the number of LEDs, the emission spectral ranges of the LEDs and any requirements associated with the light output of illuminator 301. For example, light combiner 314 may include a suitable number of input ports based on the number of LEDs included in illuminator 301. In the illustrated example, illuminator 301 includes three LEDs and light combiner 314 has three input ports. Each input port receives one of light beams 311, 312 and 313 from LEDs 302, 303 and 304 respectively. A smaller number of input ports can reduce the combined illuminance output of light combiner 314. A larger number of input ports can reduce the light collection efficiency and/or increase the complexity/size/cost of illuminator 301.

**The** design of light combiner 314 can define the spatial positioning of LEDs 302, 303, 304, and other components of illuminator 301. A compact design of light combiner 314 can enable integration of microscope 300 into complex industrial microscopy systems with tight space constraints.

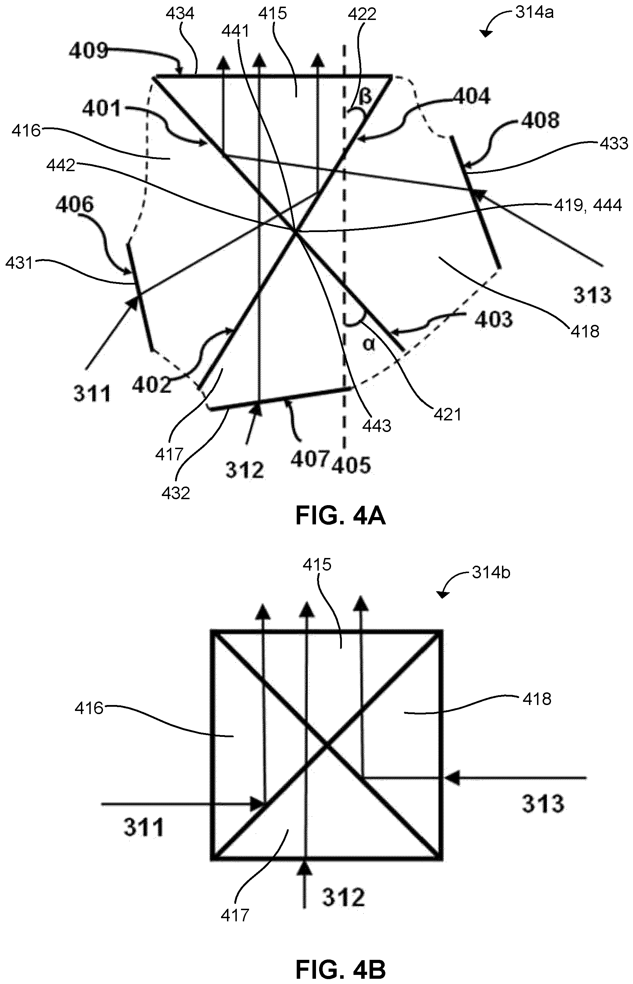

Concurrent reference is now made to FIGS. 3 and 4A. FIG. 4A shows a schematic diagram of an example light combiner 314a that may be used in illuminator 301. Light combiner 314a includes three input ports 431, 432, and 433; an output port 434; and a prism combination including four prisms 415-418. Light combiner 314a can combine input light beams 311, 312 and 313 at input ports 431, 432, and 433 respectively to generate a combined/superimposed light output at output port 434. Output port 434 may be orthogonal to optical axis 405 of illuminator 301 and the combined light output may propagate along optical axis 405.

**As** illustrated in FIG. 4A, the four prisms 415-418 may be positioned with their prism apexes 441-444 respectively in contact at a single point 419. Prisms 415-418 may have any suitable shape and/or size to enable unobstructed propagation of beams 311, 312, and 313 through light combiner 314a. In the illustrated example, dashed lines indicate any arbitrary suitable prism shape may be used outside the light combiner clear aperture. In some embodiments, the prism combination of light combiner 314a may include two pairs of identical simple shape isosceles prisms.

Prisms 415-418 may be made of high refractive index glass, for example, glass with refractive index (for 587.56nm wavelength light) in a range from 1.53-1.8. In some examples, the refractive index may be smaller than 1.53 to reduce cost. In some examples, the refractive index may be greater than 1.8 to provide improved performance.

The prism angles adjacent to the prism apexes are selected such that the adjacent prisms surfaces belong to planes 401 or 402. Planes 401 and 402 intersect each other and make angles 421 ($\alpha$) and 422 ($\beta$) respectively with optical axis 405 of illuminator 301.

A first dichroic coating 403 may be deposited on plane 401. Dichroic coating 403 can be substantially reflective for emission spectral band of LED 304, and substantially transparent for emission spectral bands of LEDs 302 and 303. As illustrated in FIG. 4A, dichroic coating 403 can reflect light beam 313 from LED 304 while transmitting light beams 311 and 312 from LEDs 302 and 303 respectively.

A second dichroic coating 404 may be deposited on plane 402. Dichroic coating 404 can be substantially reflective for emission spectral band of LED 302, and substantially transparent for emission spectral bands of LEDs 303 and 304. As illustrated in FIG. 4A, dichroic coating 404 can reflect light beam 311 from LED 302 while transmitting light beams 312 and 313 from LEDs 303 and 304 respectively.

As illustrated in FIG. 4A, light beams 311 and 313 may be injected into light combiner 314a (at input ports 431 and 433 respectively) such that they propagate along illuminator optical axis 405 after being reflected by dichroic coatings 404 and 403 respectively. Light beam 312 may be injected into light combiner 314a along illuminator optical axis 405 (at input port 432) such that it propagates along illuminator optical axis 405 after being transmitted by dichroic coatings 403 and 404.

In some embodiments, light combiner 314a may be polarization insensitive. Dichroic coatings 403 and 404 may equally transmit/reflect incoming light with any polarization. For example, first dichroic coating 403 and second dichroic coating 404 may have substantially similar reflectance and transmittance coefficients for -s and -p polarized light.

In some embodiments, the surfaces of input ports 431, 432, and/or 433 may include antireflective coatings 406, 407 and/or 408 respectively. In some embodiments, the same coating may be used for antireflective coatings 406, 407 and 408. In some embodiments, different coatings may be used for antireflective coatings 406, 407 and 408. For example, each of antireflective coatings 406, 407 and 408 may be optimized for the spectral range and/or angle of incidence of corresponding light beams 311, 312 and 313 respectively.

In some embodiments, the surface of output port 434 may include antireflective coating 409. Antireflective coating 409 may be optimized for a 0° angle of incidence and the combined emission spectrum of LEDs 302, 303 and 304.

Reference is now made to FIGS. 3, 4A and 4B. FIG. 4B shows a schematic diagram of an example light combiner 314b that may be used in illuminator 301. For example, light combiner 314b may be used in illuminator designs having less stringent space constraints. Light combiner 314b corresponds to a specific configuration of light combiner 314a, where each of the four prisms 415-418 are identical right angle prisms. The prism combination of light combiner 314b may be referred to as an X-cube. As discussed herein with reference to light combiner 314a, light combiner 314b can be configured for polarization insensitive operation.

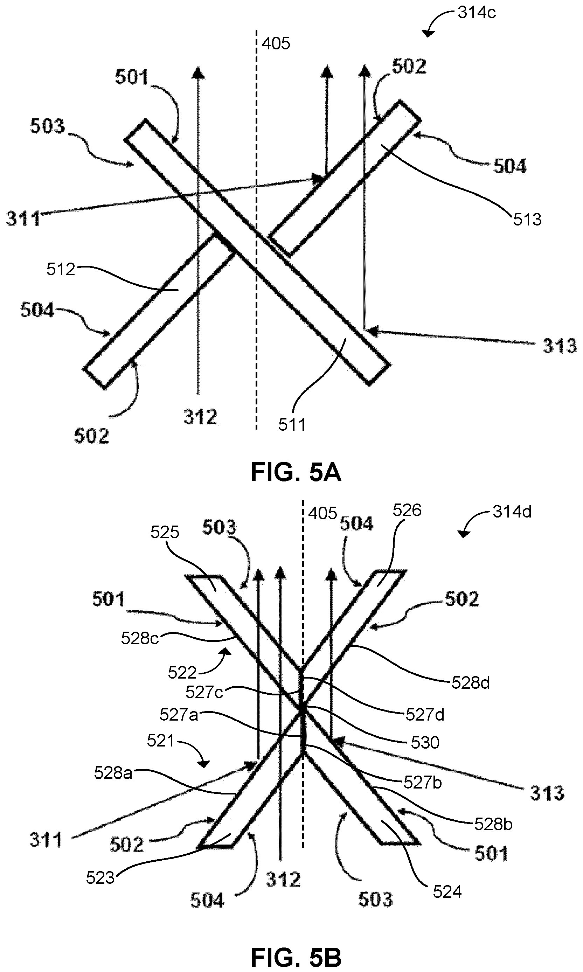

Reference is now made to FIGS. 3 and 5A. FIG. 5A shows a schematic diagram of an example light combiner 314c that may be used in illuminator 301. As illustrated in FIG. 5A, light combiner 314c includes three optically transparent plates 511, 512, and 513. Light combiner 314c can combine input light beams 311, 312 and 313 from LEDs 302, 303 and 304 respectively.

A first dichroic coating 501 may be deposited on plate 511. Dichroic coating 501 can be substantially reflective for emission spectral band of LED 304, and substantially transparent for emission spectral bands of LEDs 302 and 303. As illustrated in FIG. 5A, dichroic coating 501 can reflect light beam 313 from LED 304 while transmitting light beams 311 and 312 from LEDs 302 and 303 respectively.

A second dichroic coating 502 may be deposited on plates 512 and 513. Dichroic coating 502 can be substantially reflective for emission spectral band of LED 302, and substantially transparent for emission spectral bands of LEDs 303 and 304. As illustrated in FIG. 5A, dichroic coating 502 can reflect light beam 311 from LED 302 while transmitting light beams 312 and 313 from LEDs 303 and 304 respectively.

As illustrated in FIG. 5A, light beams 311 and 313 may be injected into light combiner 314c such that they propagate along illuminator optical axis 405 after being reflected by dichroic coatings 502 and 501 respectively. Light beam 312 may be injected into light combiner 314c along illuminator optical axis 405 such that it propagates along illuminator optical axis 405 after being transmitted by dichroic coatings 501 and 502.

In some embodiments, light combiner 314c may be polarization insensitive. Dichroic coatings 501 and 502 may equally transmit/reflect incoming light with any polarization. For example, first dichroic coating 501 and second dichroic coating 502 may have substantially similar reflectance and transmittance coefficients for -s and -p polarized light.

An antireflective coating 503 may be deposited on plate 511 and/or an antireflective coating 504 may be deposited on plates 512 and 513. Same or different coatings may be used for antireflective coatings 503 and 504. For example, antireflective coatings 503 and 504 may be optimized for the spectral range and/or angle of incidence of light beams 311, 312 and 313.

Reference is now made to FIGS. 3, 5A and 5B. FIG. 5B shows a schematic diagram of an example light combiner 314d that may be used in illuminator 301. As illustrated in FIG. 5B, light combiner 314d includes two pairs (521 and 522) of optically transparent plates. Pair 521 includes a first plate 523 and a second plate 524. Pair 522 includes a first plate 525 and a second plate 526.

Each of plates 523-526 may include a first surface 528 with a dichroic coating and a beveled edge 527 extending from first surface 528. In the illustrated example, plate 523 includes first surface 528a and beveled edge 527a, plate 524 includes first surface 528b and beveled edge 527b, plate 525 includes first surface 528c and beveled edge 527c, and plate 526 includes first surface 528d and beveled edge 527d. First surfaces 528b and 528c may have a first dichroic coating 501. First surfaces 528a and 528d may have a second dichroic coating 502.

As illustrated in FIG. 5B, first plate 523 and second plate 524 of pair 521 may be positioned with their beveled edges (527a and 527b respectively) in contact with each other to form a "V' shaped structure where the dichroic coating is on an outer side of the "V" shaped structure. In a similar manner, first plate 525 and second plate 526 of pair 522 may be positioned with their beveled edges (527c and 527d respectively) in contact with each other to form a "V' shaped structure where the dichroic coating is on an outer side of the "V" shaped structure. Light combiner 314d may be formed by positioning the two "V" shaped structures in contact at their base points 530.

Dichroic coating 501 can be substantially reflective for emission spectral band of LED 304, and substantially transparent for emission spectral bands of LEDs 302 and 303. As illustrated in FIG. 5B, dichroic coating 501 can reflect light beam 313 from LED 304 while transmitting light beams 311 and 312 from LEDs 302 and 303 respectively.

Dichroic coating 502 can be substantially reflective for emission spectral band of LED 302, and substantially transparent for emission spectral bands of LEDs 303 and 304. As illustrated in FIG. 5B, dichroic coating 502 can reflect light beam 311 from LED 302 while transmitting light beams 312 and 313 from LEDs 303 and 304 respectively.

As illustrated in FIG. 5B, light beams 311 and 313 may be injected into light combiner 314d such that they propagate along illuminator optical axis 405 after being reflected by dichroic coatings 502 and 501 respectively. Light beam 312 may be injected into light combiner 314d along illuminator optical axis 405 such that it propagates along illuminator optical axis 405 after being transmitted by dichroic coatings 501 and 502.

In some embodiments, light combiner 314d may be polarization insensitive. Dichroic coatings 501 and 502 may equally transmit/reflect incoming light with any polarization. For example, first dichroic coating 501 and second dichroic coating 502 may have substantially similar reflectance and transmittance coefficients for -s and -p polarized light.

As illustrated in FIG. 5B, an antireflective coating (503, 504) may be deposited on a second surface of each plate (523-526) such that the antireflective coating is on an inner side of the "V" shaped structures. Same or different coatings may be used for antireflective coatings 503 and 504. For example, antireflective coatings 503 and 504 may be optimized for the spectral range and/or angle of incidence of light beams 311, 312 and 313.

Example light combiners 314c (FIG. 5A) and 314d (FIG. 5B) may enable reduction in cost and/or manufacturing complexity compared with light combiners 314a (FIG. 4A) and 314b (FIG. 4B). However, light beams 311, 312 and 313, being transmitted and reflected by light combiners 314c/314d can experience propagation inhomogeneity while propagating through the junction areas between the plates of the light combiner. The width of the junction areas can be of a similar order of magnitude as the thickness of the plates (e.g., approximately 1mm) and the resulting inhomogeneity can reduce the illuminance provided by the illuminator. Additionally, beams 311, 312 and 313, being collimated or substantially collimated, the inhomogeneities may become visible in the object plane and/or the image plane of the microscope. Example light combiners 314a (FIG. 4A) and 314b (FIG. 4B) may also have light propagation inhomogeneities corresponding to the junction area between the apexes of the prism. However, this junction area can be significantly smaller (e.g., approximately $30\mu m$) compared with the junction area associated with light combiners 314c (FIG. 5A) and 314d (FIG. 5B).

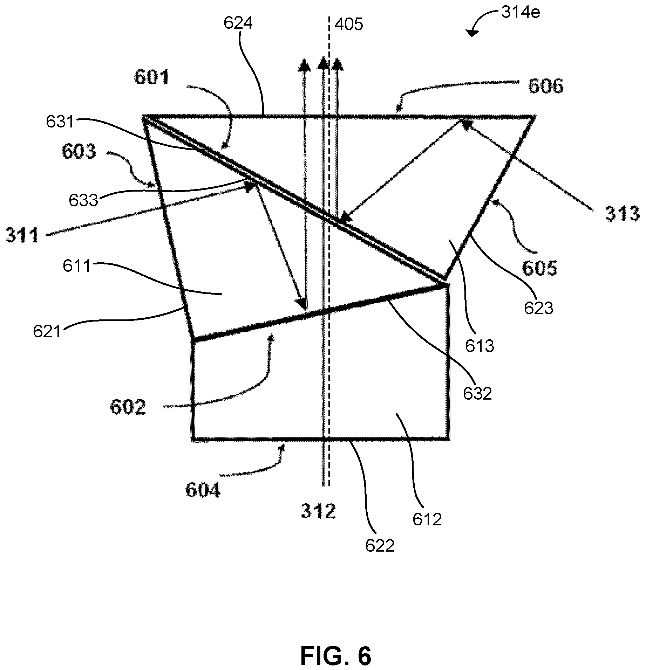

Reference is now made to FIGS. 3 and 6. FIG. 6 shows a schematic diagram of an example light combiner 314e that may be used in illuminator 301. Light combiner 314e may be referred to as a Philips prism. Light combiner 314e includes three input ports 621, 622, and 623; an output port 624; and a prism combination including three prisms 612-614. Light combiner 314e can combine input light beams 311, 312 and 313 at input ports 621, 622, and 623 respectively to generate a combined/superimposed light output at output port 624. Output port 624 may be orthogonal to optical axis 405 of illuminator 301 and the combined light output may propagate along optical axis 405.

As illustrated in FIG. 6, light combiner 314e includes two triangular prisms (611, 613) and one rectangular prism (612) cemented into an assembly. Triangular prisms 611 and 613 may include an air gap 631 between them. Rectangular prism 612 may be optically cemented on a face 632 thereof to a face of triangular prism 611, opposite air gap bonded face 633. As illustrated in FIG. 6, dichroic coatings 601 and 602 may be deposited onto the faces of triangular prisms 611 and 613.

First dichroic coating 601 can be substantially reflective for emission spectral band of LED 304, and substantially transparent for emission spectral bands of LEDs 302 and 303. As illustrated in FIG. 6, first dichroic coating 601 can reflect light beam 313 from LED 304 while transmitting light beams 311 and 312 from LEDs 302 and 303 respectively.

Second dichroic coating 602 can be substantially reflective for emission spectral band of LED 302, and substantially transparent for emission spectral bands of LEDs 303 and 304. As illustrated in FIG. 6, dichroic coating 602 can reflect light beam 311 from LED 302 while transmitting light beams 312 and 313 from LEDs 303 and 304 respectively.

As illustrated in FIG. 6, light beam 311 may experience total internal reflection after entering light combiner 314e and may be directed towards dichroic coating 602. Dichroic coating 602 may substantially reflect beam 311 towards output port 624. Light beam 312 may be injected into light combiner 314e along illuminator optical axis 405 (at input port 622) such that it propagates along illuminator optical axis 405 after being transmitted by dichroic coatings 601 and 602. Light beam 313 may experience total internal reflection after entering light combiner 314e and may be directed towards dichroic coating 601. Dichroic coating 601 may substantially reflect beam 313 towards output port 624. The prism angles and refractive indices of the prism optical media may be suitably selected to provide total internal reflection of light beams 311 and 313, and their subsequent propagation along optical axis 405.

In some embodiments, light combiner 314e may be polarization insensitive. Dichroic coatings 601 and 602 may equally transmit/reflect incoming light with any polarization. For example, first dichroic coating 601 and second dichroic coating 602 may have substantially similar reflectance and transmittance coefficients for -s and -p polarized light.

In some embodiments, the surfaces of input ports 621, 622, and 623 may include antireflective coatings 603, 604, and 605 respectively. In some embodiments, the same coating may be used for antireflective coatings 603, 604, and 605. In some embodiments, different coatings may be used for antireflective coatings 603, 604, and 605. For example, each of antireflective coatings 603, 604, and 605 may be optimized for the spectral range and/or angle of incidence of corresponding light beams 311, 312 and 313 respectively. In some embodiments, each of light beams 311, 312 and 313 may have a 0° angle of incidence. In other embodiments, one or more light beams 311, 312 and 313 may not have a 0° angle of incidence.

In some embodiments, the surface of output port 624 may include antireflective coating 606. Antireflective coating 606 may be optimized for a 0° angle of incidence and the combined emission spectrum of LEDs 302, 303 and 304.

Light combiner 314e may enable reduction in light propagation inhomogeneities (and resulting light intensity variations in the microscope object plane and image plane) compared with, for example, light combiners 314a-314d (FIGS. 4A, 4B, 5A, and 5B). However, light combiner 314e may have a larger size and/or manufacturing cost for the same clear apertures in comparison with light combiners 314a-314d (FIGS. 4A, 4B, 5A, and 5B). Additionally, the light path inside light combiner 314e may be longer compared with light combiners 314a-314d (FIGS. 4A, 4B, 5A, and 5B), thereby reducing the light collection efficiency of light combiner 314e.

Referring now to FIG. 3, illuminator 301 may include multiple lens assemblies to collect and collimate the light emitted by the LEDs. Each lens assembly may be positioned between a LED and light combiner 314. In the illustrated example, lens assembly 308 is positioned between LED 302 and light combiner 314, lens assembly 309 is positioned between LED 303 and light combiner 314, and lens assembly 310 is positioned between LED 304 and light combiner 314.

Each lens assembly may include any suitable combination of lenses (e.g., spherical/aspheric, cylindrical/noncylindrical etc.) that are optimized for operation with light of different spectral ranges. In some embodiments, a lens assembly may include the compound lens assembly (if present) of a corresponding LED. An illuminator having LEDs with non-identical emission spectral ranges may include different lens assemblies that are each optimized for the corresponding spectral range. In the illustrated example, lens assemblies 308, 309, and 310 may create collimated or substantially collimated beams of light 311, 312, and 313 respectively.

In some embodiments, illuminator 301 includes a monochrome apodizing filter positioned between each of the multiple lens assembles and the corresponding LED. In the illustrated example, apodizing filter 327 is positioned between lens assembly 308 and light combiner 314, apodizing filter 328 is positioned between lens assembly 309 and light combiner 314, and apodizing filter 329 is positioned between lens assembly 310 and light combiner 314. Apodizing filters 327, 328, and 329 can be any suitable apodizing filter (e.g., absorptive, refractive or diffractive apodizing filters) that equalize the light intensity distribution in the microscope image plane.

Focusing assembly 315 may be positioned between light combiner 314 and polarizer 316. Focusing assembly 315 may have any suitable design to create Kohler illumination by converting the collimated superimposed light beams emerging from the output port of light combiner 314 into overlapping LED light source images in a back focal plane of objective lens 321. In some embodiments, focusing assembly 315 may include achromatic lenses that reduce the LED emitter images' chromatic shifts along the microscope optical axis in the vicinity of the back focal plane of objective lens 321.

Focusing assembly 315 in combination with lens assemblies 308, 309, 310 may constitute an isomorphic or anamorphic magnifier. Isomorphic magnifiers may be used when the LED emitters have a round or a square shape. Anamorphic magnifier may be used when the LEDs emitter has a rectangular shape.

A reduction in distance between the lens assemblies (308, 309, 310) and focusing assembly 315 can increase the light throughput of illuminator 301. The light beams 311, 312, and 313 may be substantially collimated but may still be diverging as they travel from the lens assemblies to focusing assembly 315. A larger distance between the lens assemblies and focusing assembly 315 can reduce the amount of light collected by focusing assembly 315. A compact design of light combiner 314 (e.g., light combiners 314a-314e shown in FIGS. 4A, 4B, 5A, 5B, and 6) can reduce the distance between the lens assemblies and focusing assembly 315 compared with other light combiner designs (e.g., the light combiner of illuminator 201 of microscope 200 (FIG. 2) that uses two plate dichroic mirrors 207 and 208). This can enable illuminator 301 to provide increased light throughput compared with illuminator 201 of microscope 200 (FIG. 2). In some embodiments, the distance between the lens assemblies (308, 309, 310) and focusing assembly 315 can be in a range from 25-30mm. In other embodiments, the distance may be smaller than 25mm or greater than 30mm. For example, the distance can be 30-35mm in illuminators that include apodizing filters (e.g., apodizing filters 327-329).

In some embodiments, an achromatic apodizing filter 330 is positioned between light combiner 314 and focusing assembly 315. In other embodiments, illuminator 301 may not include any apodizing filters positioned between light combiner 314 and focusing assembly 315.

Polarizer 316 can have any suitable design to receive and split the light output from light combiner 314 into two polarized portions, so that a first polarized portion is directed towards specimen 107. For example, polarizer 316 may be a broadband polarizing beamsplitting (PBS) cube or a wire-grid plate polarizer. In some embodiments, the second polarized portion may be directed towards absorber 317.

In the illustrated example, light output from light combiner 314 passes through focusing assembly 315 before entering polarizer 316. Light entering polarizer 316 may be substantially non-polarized. Polarizer 316 may split the input light into a -s polarized portion and a -p polarized portion. For example, the first polarized portion may be -s polarized and the second polarized portion may be -p polarized. As another example, the first polarized portion may be -p polarized and the second polarized portion may be -s polarized.

An efficiency $E_P$ of polarizer 316 may be defined as a product of reflection coefficient $R_S$ for -s polarized light and transmission coefficient $T_P$ for -p polarized light according to equation (1) below -

$$E_P = R_S * T_P \qquad \text{Equation (1)}$$

The efficiency $E_P$ of a PBS cube may be greater than the efficiency $E_P$ of a wire-grid plate polarizer. For example, $E_P$ may be approx. 0.9 for a wire-grid plate polarizer and $E_P$ may be approx. 0.93-0.97 for a PBS cube. In other examples, the polarizers may have different efficiency values.

In the illustrated example, polarizer 316 includes a PBS cube. In some embodiments, the PBS cube may be made of high refractive index glass, for example, glass with refractive index in a range from 1.53-1.8. In other examples, the PBS cube may not be made of high refractive index glass. All four polished PBS cube surfaces may have broadband antireflective coatings. The antireflective coatings may be optimized for the wavelength range of input light. For example, the antireflective coating may be optimized for the 400-700nm wavelength range. The light output from polarizer 316 may be converging during propagation towards objective lens 321 to create the microscope's Kohler illumination.

The angle of incidence (AOI) of the input light from focusing assembly 315 into polarizer 316 may be approximately 45°. The polarizing coating of the PBS cube may be designed for a 45° angle of incidence. The PBS cube may only provide uniform reflectance/transmittance for incoming beams with AOI of approximately 45°. The reflectance/transmittance characteristics of the polarizing coating of the PBS cube may change for substantial deviations from a 45° AOI, thereby causing light intensity non-uniformity across the reflected/transmitted beams. The light intensity non-uniformity across the reflected/transmitted beams may result in non-uniform microscope image intensities.

Retarder 318 and sensor coupling filter 319 may have any suitable design to receive the first polarized light portion from polarizer 316 and convert the first polarized light portion into circularly polarized light directed towards specimen 107. For example, sensor coupling filter 319 may introduce approximately zero phase shift for the first polarized light portion and retarder 318 may be an achromatic quarter wave plate (QWP). In other examples, other suitable combinations of retarder 318 and sensor coupling filter 319 may be used. For example, sensor coupling filter 319 may introduce a non-zero phase shift and retarder 318 may be designed to compensate for the non-zero phase shift of sensor coupling filter 319.

In some embodiments, the combined emission spectrum of LEDs 302, 303 and 304 may correspond to a substantial portion of the visible spectral range. The combination of retarder 318 and sensor coupling filter 319 can convert the first polarized light portion into circularly polarized light for the entire visible spectral range.

Retarder 318 may include any suitable number of retardation plates made of birefringent materials. Retarder 318 may include retardation plates made of different birefringent materials. In some embodiments, the retardation plates may be made using crystalline materials and may be air-spaced to reduce the transmitted light wavefront error (TWE). In some embodiments, the retardation plates may be made using polymer materials. Retardation plates made using crystalline materials may provide higher imaging performance compared with retardation plates made using polymer materials that can be hazier.

All internal and external surfaces of retarder 318 may have broadband antireflective coatings. The antireflective coatings may be optimized for the spectral range provided by illuminator 301 (e.g., 400-700nm wavelength range).

In the illustrated example, sensor coupling filter 319 is positioned between retarder 318 and specimen 107. In some embodiments, retarder 318 and sensor coupling filter 319 may be inclined with respect to the microscope optical axis to prevent light reflected from surfaces of retarder 318 and/or sensor coupling filter 319 entering imaging system 307.

The combination of retarder 318 and sensor coupling filter 319 can convert circularly polarized reflected light from specimen 107 into linearly polarized light that is directed towards imaging system 307. For example, the first polarized portion may be substantially -s polarized and is converted by retarder 318 and sensor coupling filter 319 into circularly polarized light directed towards specimen 107. The circularly polarized reflected light from specimen 107 may then be converted to substantially -p polarized light that can travel through polarizer 316 with minimal losses (i.e., no substantial portion of reflected light from specimen 107 is diverted towards absorber 317). This can increase the light throughput of microscope 300 by approximately two times in comparison with microscopes 100 and 200 that use a 50T/50R beamsplitter and divert approximately half of the light reflected from specimen 107 towards an illuminator.

Microscope 300 can enable the increased light throughput for the entire spectral range of illumination light (e.g., 400nm-700nm) using broadband polarizer 316 and by matching the birefringent properties of retarder 318 to the birefringent properties of other components of microscope 300. Microscope 300 can provide large degree of achromatization despite the presence of optical path components that can cause light polarization changes.

For most inspected specimens 107, the reflected light from specimen 107 reaching sensor coupling filter 319 may be substantially circularly polarized. Some changes in light polarization may occur during reflection from conductive specimens 107 and as light passes through objective lens 321 and/or sensor coupling filter 319. In some embodiments, the polarization changes may be reduced using suitable design of objective lens 321. For example, low numeric aperture (NA) objective lenses may be used during inspection of conductive specimens 107 to reduce the polarization changes. Polarization changes within sensor coupling filter 319 may be compensated using corresponding modifications in retarder 318.

In the illustrated example, autofocus system 340 includes an autofocus sensor 320, an actuator 323 and an autofocus control system 324. In other examples, autofocus system 340 may include a different combination of components. For example, autofocus system 340 may not include an autofocus control system 324 and control system 306 may control operation of autofocus system 340.

Autofocus sensor 320 may have any suitable design based on requirements of microscope 300. For example, microscope 300 may include multiple infinity corrected microscope objectives 321 that are attached to lens changer 322. A through-the-lens structured light autofocus sensor may be used for industrial scanning applications using microscope 300. In other examples, different autofocus sensor 320 may be used.

Actuator 323 can have any suitable design to provide controlled movement of lens changer 322 and microscope objectives 321 along the microscope optical axis. Autofocus control system 324 can receive focusing data from autofocus sensor 320 and provide corresponding control signals to actuator 323 to keep microscope 300 in focus during scanning inspection of specimen 107.

Tube lens 326 may have any suitable design to create an inspected specimen image in an image plane of microscope 300, where an image sensor 331 of imaging system 307 is positioned. Image sensor 331 may have any suitable design to capture images of inspected specimen 107. For example, image sensor 331 may include one or more charge-coupled device (CCD) or complementary metal-oxide semiconductor (CMOS) chips having CCD or CMOS photosensitive elements for image sensing.

In some embodiments, imaging system 307 can acquire color images of specimen 107. Color images may enable higher inspection performance of specimen 107 (e.g., higher detection/classification reliability of defects in specimen 107). The pixels of image sensor 331 may be covered with color filters, forming a Bayer pattern. Any suitable pixel size may be used. Scanning microscopy applications may typically use low magnification objective lenses, for example, magnifications/numerical apertures (NA) may be 1X/0.025, 2X/0.055, 5X/0.14, 7.5X/0.21 and 10X/0.28. For low magnification objective lenses and tube lens 326 with a 1X magnification, pixel sizes of 2.5 $\mu$m or smaller may be used for suitable imaging of objects in blue light (wavelength $\lambda \sim 450$ nm).

LED driver 305 can be any suitable computer-controlled driver that generates drive signals for LEDs 302, 303 and 304 based on control signals provided by control system 306. LED driver 305 may drive the LEDs with constant or pulsed currents based on control signals received from control system 306. LED driver 305 may provide current pulses and/or trigger signals with high duration and timing accuracy (e.g., precision $\Delta Tp \leq 100$ ns). For an example global shutter color camera with a pixel size of p=2.5 $\mu$m, an image acquisition frame rate of 150 fps, and a pixel row count of $\sim 5000$, LED driver 305 may be configured to control the effective LED light pulse duration to T $\leq 1.3$ $\mu$sec to obtain images that are not smeared more than one pixel in scanning mode operation.

In some embodiments, LED driver 305 may generate rectangular shaped LED current pulses. LED driver 305 can provide a current pulse having a front edge without significant overcurrent outbursts to enable long service life of the LEDs. LED driver 305 can provide a current pulse having a falling edge without significant reverse current outbursts to avoid damaging the LEDs with reverse currents. In other embodiments, LED driver 305 may generate current pulses having shapes other than rectangular shaped pulses.

LED driver 305 may be configured to limit the top current value of the current pulse based on the LED rating to enable long service life of the LEDs. In some embodiments, LED driver 305 may be configured to provide lower value currents for driving LEDs in a constant current mode.

Control system 306 can include any suitable processor, controller and/or digital signal processor that can provide sufficient processing power depending on the configuration, purposes and requirements of control system 306 as is known by those skilled in the art. For example, control system 306 may be a high-performance general processor. For example, control system 306 may include a standard processor, such as an Intel@ processor, or an AMD® processor. Alternatively, control system 306 can include more than one processor with each processor being configured to perform different dedicated tasks. Alternatively, specialized hardware (e.g., an application-specific integrated circuit (ASIC), a field-programmable gate array (FPGA), an application-specific microcontroller etc.) can be used to provide some of the functions provided by control system 306.

Control system 306 may be configured to provide shutter control signals to imaging system 307 and control signals to LED driver 305. The control signals may control operation mode, current levels and/or light pulse durations of LEDs 302, 303 and 304. Control system 306 may control timing of LED light pulses relative to image acquisition by imaging system 307 to achieve high microscope image intensity and/or reduce image smearing.

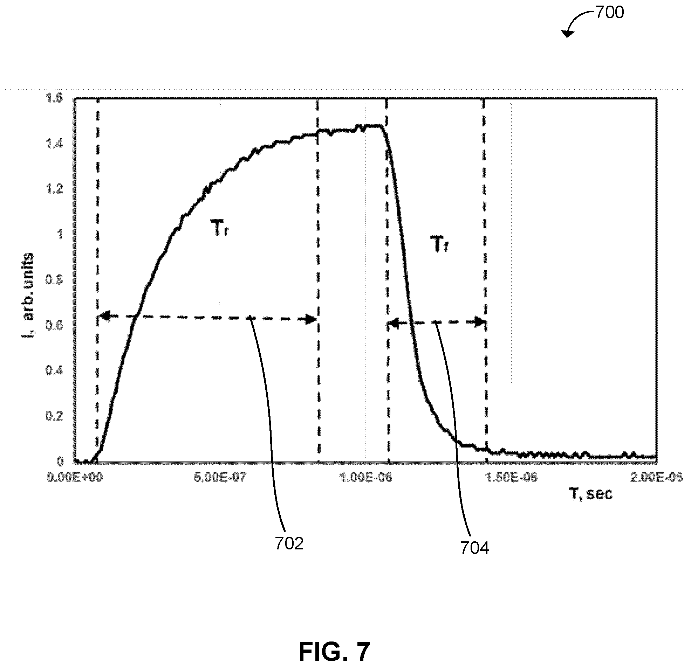

The LED light emission may not rise or fall instantaneously in response to a drive signal due to the LED capacitance and the inductance, capacitance and/or resistance associated with the LED wiring. Reference is now made to FIG. 7 showing an intensity graph 700 of an example LED emission light pulse. The LED emission light pulse has a rising edge with time duration 702 ($T_r$) and a falling edge with time duration 704 (Tf). The time durations 702 and 704 can vary based on the LED characteristics. For example, converted green LED luminophore emission dynamics may have higher time durations 702 and 704 compared with non-luminophore LEDs. The time durations 702 and 704 may be reduced by reducing the inductance, capacitance and/or resistance associated with the LED wiring. Shorter time durations 702 and 704 may enable a more rectangular shaped LED emission light pulse.

Imaging system 307 may include a list of allowed pre-determined exposure times ($T_e$). Control system 306 may select one of the allowed exposure times during operation. During scanning inspection operation, longer exposure times of imaging system 307 can increase the acquired image intensity, but also increase image smearing. Control system 306 can provide shutter control signals and LED control signals to optimize the balance between image intensity and image smearing for a given microscope scanning speed. For example, control system 306 may control a time delay ($T_{LED}$) between a global shutter open signal and a LED turn-on signal.

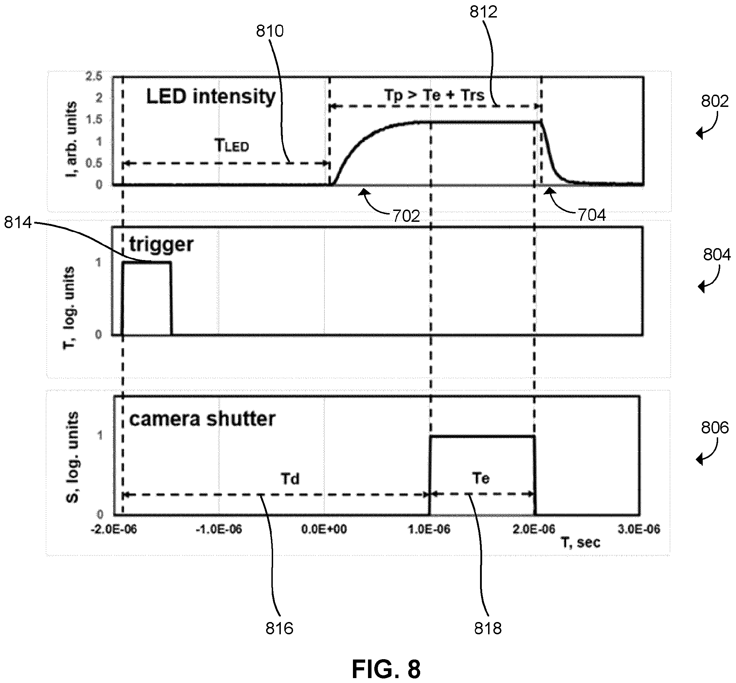

Reference is now made to FIG. 8 showing an intensity graph 802 of an example LED emission light pulse, an example global shutter control signal graph 804, and an example global shutter operation timing graph 806. Global shutter imaging systems typically have a shutter open delay time 816 ($T_d$) between the time an external trigger 814 to open the shutter is received and the time the shutter opens. In some embodiments, time delay 816 may be on the order of a few microseconds. Control system 306 may control a delay time 810 ($T_{LED}$) between trigger 814 and a LED turn-on signal so shutter opens at the same time as the LED with slowest turn-on delay time 702 (e.g., among the multiple LEDs 302, 303 and 304 in FIG. 3, LED 302 may have the slowest turn-on delay time) reaches its full intensity level. For example, control system 306 may control delay time 810 ($T_{LED}$) according to the following equation -

$$T_{LED} = T_d - T_{rs} \qquad\qquad \text{Equation (2)}$$

In some examples, an allowed exposure time ($T_e$) of imaging system 307 may be sufficient for acquiring images with sufficient image intensity and acceptable level of image smearing. Control system 306 may control a duration ($T_p$) of the LED turn-on signal to be greater than a sum of (i) a pre-determined exposure time ($T_e$) of the imaging system and (ii) the slowest turn-on delay time ($T_{rs}$) according to the following equation -

$$T_P > T_e + T_{rs} \qquad\qquad \text{Equation (3)}$$

**As** shown in FIG. 8, control system 306 enables the shutter to be opened in synchronization with the LED with slowest turn-on delay time reaching its full intensity level. Control system 306 can control the shutter to remain open for the pre-determined exposure time ($T_e$). This can enable specimen 107 to be imaged while illuminator 301 delivers the highest possible light illuminance to the microscope object plane.

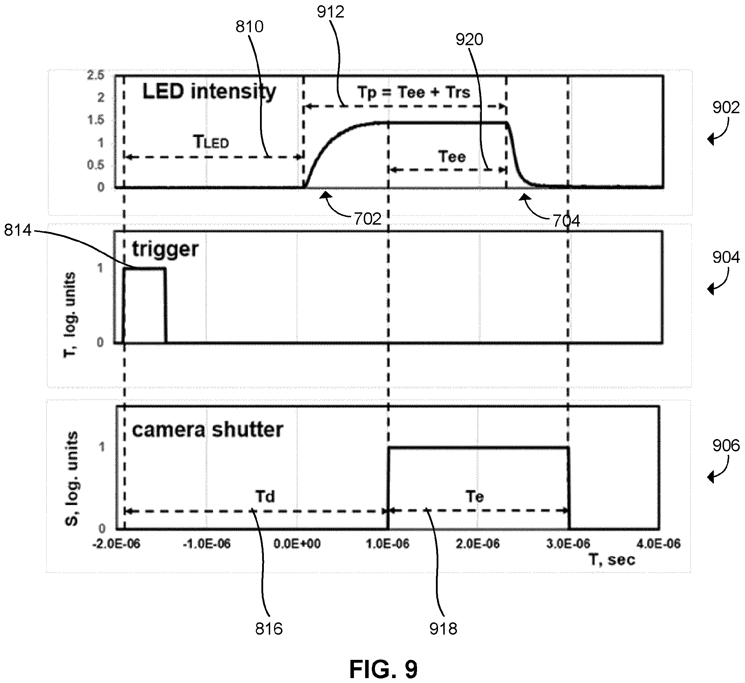

Reference is now made to FIG. 9 showing an intensity graph 902 of an example LED emission light pulse, an example global shutter control signal graph 904, and an example global shutter operation timing graph 906. In some examples, an allowed exposure time ($T_e$) of imaging system 307 may not be sufficient for acquiring images with sufficient image intensity, but the next higher allowed exposure time may cause an unacceptable level of image smearing. Control system 306 may select the higher allowed exposure time but use an exposure time limitation method to reduce image smearing to an acceptable level.

In the exposure time limitation method, control system may control the LEDs and imaging system such that the imaging system is exposed for an illumination-limited time. The illumination-limited time may be set shorter than a pre-determined exposure time. The exposure time limitation method may use a LED light pulse that is substantially rectangular shaped. Typically, the falling edge duration of a LED light pulse (e.g., 200-300ns for an example medium power LED) may be shorter than the rising edge of the LED light pulse (e.g., 500-700ns for an example medium power LED). The falling edge may therefore provide a more rectangular shaped pulse for the exposure time limitation method.

In the exposure time limitation method, control system 306 may set the exposure time 918 ($T_e$) to an allowed

value that is larger than the required effective exposure time 920 ($T_{ee}$). Control system 306 may control the duration 912 ($T_p$) of the LED turn-on signal to be equal to a sum of (i) the pre-determined effective exposure time 920 ($T_{ee}$) and (ii) the slowest turn-on delay time ($T_{rs}$) according to the following equation -

$$T_P = T_{ee} + T_{rs} \qquad\qquad \text{Equation (4)}$$

As shown in FIG. 9, control system 306 can initially provide a trigger 814 for shutter of imaging system 307. After delay time 810 ($T_{LED}$) calculated using equation (2), control system 306 can provide a LED turn-on signal to the multiple LEDs. This can enable the shutter to be opened in synchronization with the LED with slowest turn-on delay time reaching its full intensity level. Control system 306 can control the shutter to remain open for the pre-determined exposure time ($T_e$). However, as soon as the required effective exposure time 920 ($T_{ee}$) lapses, control system 306 can provide a turn-off signal to the multiple LEDs. The falling edges of the LED emission pulses may cause some image smearing but the image smearing can be limited to acceptable levels. In this manner, control system 306 can use the exposure time limitation method so that the acquired image brightness and image smearing level will be substantially defined by effective exposure time ($T_{ee}$) instead of the pre-determined exposure time ($T_e$).

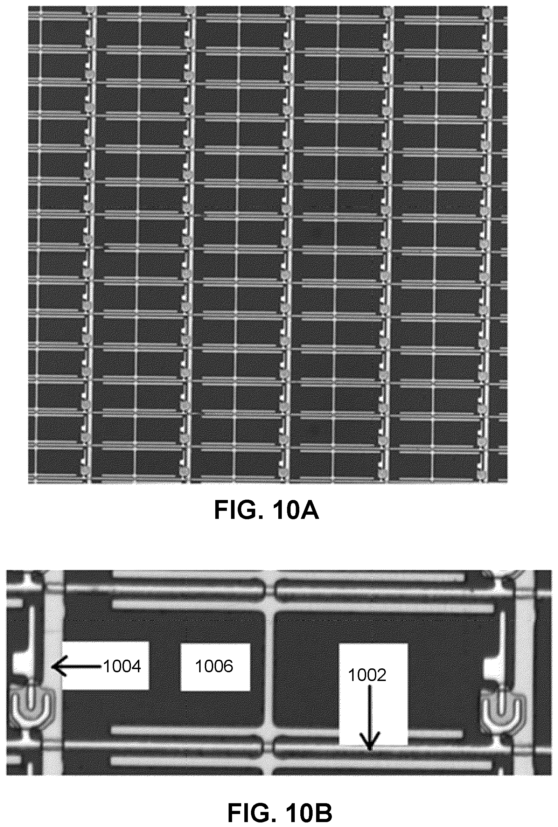

Reference is now made to FIGS. 10A and 10B showing images of a defective liquid crystal display (LCD) thin film transistor (TFT) array acquired using an example embodiment of the disclosed scanning RBF microscope. The scanning RBF microscope was equipped with an objective lens having a 10X magnification and NA = 0.28, and a tube lens having 1X magnification. The imaging system included a global shutter color camera with pixel size p = 2.5 $\mu$m. The camera image presentation data rate was set at 8 bits and the camera global amplification gain factor was set at nominal value G = 1.0. The intensities of the multiple LEDs were set such that color plane amplifiers' gain coefficients, after white balance procedure implementation, were set to $G_{red}$ = 1.20, $G_{green}$ = 1.17, $G_{blue}$ = 1.00. Effective camera exposure time was limited by $T_{ee}$ = 1.3 $\mu$s. The retarder was assembled with a 1335.2$\mu$m thick quartz plate and a 1517.3$\mu$m thick sapphire plate having their optic axes parallel to each other.

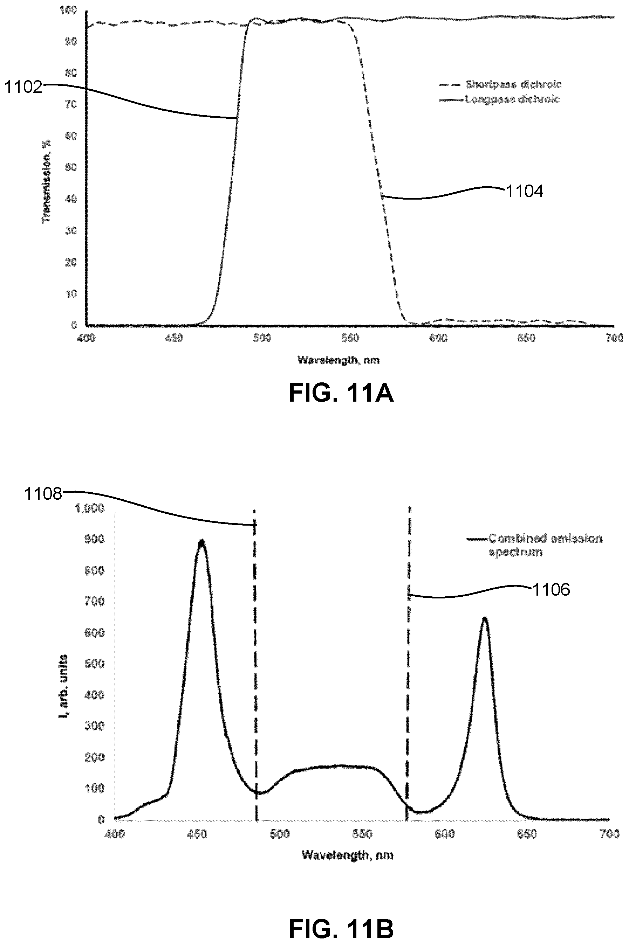

Reference is now made to FIGS. 10A, 10B, 11A and 11B. FIG. 11A is a graph showing average transmission characteristics 1102 and 1104 for a 45° AOI of a first dichroic coating and a second dichroic coating respectively of the light combiner. The first dichroic coating may perform as a shortpass filter with a cut-off wavelength of 575nm. The second dichroic coating may perform as a longpass filter with a cut-on wavelength of 485 nm. FIG. 11B is a graph showing combined emission spectrum of example red, green and blue LEDs at the output port of the light combiner. As illustrated in FIG. 11B, the three LEDs can combine to provide sufficient light power density coverage for the visible wavelength range (400-700 nm). The cut-off and cut-on wavelengths of the dichroic coatings are shown with vertical dashed lines 1106 and 1108 respectively. The selected dichroic coating parameters can reduce light losses inside the light combiner while combining the light output of the multiple LEDs.

The average red, green and blue image planes intensities, expressed in the camera digital units (D.U.), for specific areas of the inspected specimen shown in FIG. 10B, are as follows:
Average:

Data lines 1002: [R,G,B]=[255,255,255] D.U.

Gate lines 1004: [R,G,B]=[255,220,140] D.U.

Indium tin oxide (ITO) areas 1006: [R,G,B]=[69,50,94] D.U.

Image intensities equal to 255 D.U. indicate that the camera readings have reached, and, most likely, exceeded the maximum of its dynamic range for these specific areas. In such cases, the microscope light throughput may be reduced to bring all the image intensities values within the maximum dynamic range of the camera.

The example images of FIGS. 10A and 10B appear to indicate that the scanning RBF microscope in accordance with a disclosed embodiment can acquire images with acceptable intensity for a typical specimen of industrial interest; that the images can be acquired with global shutter color cameras, having pixel size as small as p = 2.5$\mu$m at maximum camera framerates; can limit image smearing for the maximum cameras framerate to below one pixel; may provide approximately 6-7 times higher microscope light throughput compared with a scanning RBF microscope that uses a single white LED illuminator; may provide approximately 2 times higher microscope light throughput compared with other scanning RBF microscopes that uses an illuminator having multiple LEDs (e.g., microscope 200 shown in FIG. 2); and can eliminate problems associated with frequent Xe lamp replacements in scanning RBF microscopes that use a Xe lamp illuminator (e.g., microscope 100 shown in FIG. 1).

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

**ITEMS**

Item 1: A scanning reflective bright field microscope for inspection of a specimen, the microscope comprising: multiple light emitting diodes (LEDs); a light combiner to combine light output of the multiple LEDs; a polarizer to receive and split the light output from the light combiner into two polarized portions, so that a first portion of the polarized light is directed towards the specimen; and a retarder and a sensor coupling filter to receive the first portion of the polarized light and convert the first portion of the polarized light into circularly polarized light directed towards the specimen, and the retarder and the sensor coupling filter converts circularly polarized reflected light from the specimen into linearly polarized light that is directed towards an imaging system.

Item 2: The scanning reflective bright field microscope of any preceding item, wherein the retarder is an achromatic quarter wave plate (QWP).

Item 3: The scanning reflective bright field microscope of any preceding item, wherein the polarizer is a broadband polarizing beam-splitting (PBS) cube.

Item 4: The scanning reflective bright field microscope of any preceding item, wherein an angle of incidence of the light output from the light combiner into the polarizer is approximately 45°.

Item 5: The scanning reflective bright field microscope of any preceding item, wherein the light output from the light combiner includes at least a portion of 400-700nm wavelength light.

Item 6: The scanning reflective bright field microscope of any preceding item, wherein the sensor coupling filter is positioned between the retarder and the specimen.

Item 7: The scanning reflective bright field microscope of any preceding item, further comprises multiple lens assemblies to collimate the light emitted by the multiple LEDs, each lens assembly being positioned between the light combiner and one of the multiple LEDs.

Item 8: The scanning reflective bright field microscope of any preceding item, further comprises a monochrome apodizing filter positioned between each of the multiple lens assembles and the light combiner.

Item 9: The scanning reflective bright field microscope of any preceding item, further comprises a focusing assembly positioned between the light combiner and the polarizer, the focusing assembly to convert collimated superimposed light beams from the multiple LEDs into overlapping LED light source images in a back focal plane of an objective lens of the microscope.

Item 10: The scanning reflective bright field microscope of any preceding item, further comprising an achromatic apodizing filter positioned between the light combiner and the focusing assembly.

Item 11: The scanning reflective bright field microscope of any preceding item, wherein: the multiple LEDs include a first LED, a second LED and a third LED; and the light combiner includes a prism combination to combine light output of the first LED, the second LED and the third LED.

Item 12: The scanning reflective bright field microscope of any preceding item, wherein the prism combination includes four prisms positioned with their prism apexes in contact at a single point.

Item 13: The scanning reflective bright field microscope of any preceding item, wherein the prism combination includes: a first surface coated with a first dichroic coating, the first dichroic coating being substantially reflective for emission spectral band of the first LED, and substantially transparent for emission spectral bands of the second LED and the third LED; and a second surface coated with a second dichroic coating, the second dichroic coating being substantially reflective for emission spectral band of the third LED, and substantially transparent for emission spectral bands of the first LED and the second LED.

Item 14: The scanning reflective bright field microscope of any preceding item, wherein the light combiner includes a polarization-insensitive X-cube.

Item 15: The scanning reflective bright field microscope of any preceding item, wherein: the light combiner includes two pairs of optically transparent plates, each plate having a first surface with a dichroic coating and a beveled edge extending from the first surface, each pair of plates including a first plate and a second plate positioned with their beveled edges in contact with each other to form a "V' shaped structure where the dichroic coating is on an outer side of the "V" shaped structure, and the light combiner is formed by positioning the two "V" shaped structures in contact at their base points.

Item 16: The scanning reflective bright field microscope of any preceding item, wherein: the multiple LEDs include a first LED, a second LED and a third LED; the dichroic coating on the first surface of the first plate is substantially reflective for emission spectral band of the first LED, and substantially transparent for emission spectral bands of the second LED and the third LED; and the dichroic coating on the first surface of the second plate is substantially reflective for emission spectral band of the third LED, and substantially transparent for emission spectral bands of the first LED and the second LED.

Item 17: The scanning reflective bright field microscope of any preceding item, wherein each plate has a second surface having an antireflective coating where the antireflective coating is on an inner side of the "V" shaped structure.

Item 18: The scanning reflective bright field microscope of any preceding item, wherein a second portion of the polarized light is directed towards an absorber.

Item 19: The scanning reflective bright field microscope of any preceding item, further comprising a control system configured to provide a shutter control signal to the imaging system.

Item 20: The scanning reflective bright field microscope of any preceding item, wherein the control system is configured to optimize microscope image intensity by controlling a time delay ($T_{LED}$) between a global shutter open signal and a LED turn-on signal.

Item 21: The scanning reflective bright field microscope of any preceding item, wherein the time delay ($T_{LED}$) is equal to a time difference between (i) a shutter open delay time ($T_d$) and (ii) a slowest turn-on delay time ($T_{rs}$) of the multiple LEDs.

Item 22: The scanning reflective bright field microscope of any preceding item, wherein the LED turn-on signal has a duration ($T_p$) greater than a sum of (i) a pre-determined exposure time ($T_e$) of the imaging system and (ii) the slowest turn-on delay time ($T_{rs}$) of the multiple LEDs.

Item 23: The scanning reflective bright field microscope of any preceding item, wherein the LED turn-on signal has a duration ($T_p$) equal to a sum of (i) a pre-determined effective exposure time ($T_{ee}$) of the imaging system and (ii) the slowest turn-on delay time ($T_{rs}$) of the multiple LEDs.

**Claims**

1. A scanning reflective bright field microscope for inspection of a specimen, the microscope comprising:

    multiple light emitting diodes (LEDs);
    a light combiner to combine light output of the multiple LEDs;
    a polarizer to receive and split the light output from the light combiner into two polarized portions, so that a first portion of the polarized light is directed towards the specimen; and
    a retarder and a sensor coupling filter to receive the first portion of the polarized light and convert the first portion of the polarized light into circularly polarized light directed towards the specimen, and the retarder and the sensor coupling filter converts circularly polarized reflected light from the specimen into linearly polarized light that is directed towards an imaging system.

2. The scanning reflective bright field microscope of claim 1, wherein the retarder is an achromatic quarter wave plate (QWP).

3. The scanning reflective bright field microscope of claim 1 or claim 2, wherein the polarizer is a broadband polarizing beam-splitting (PBS) cube, optionally wherein an angle of incidence of the light output from the light combiner into the polarizer is approximately 45°.

4. The scanning reflective bright field microscope of any one of claims 1 to 3, wherein the light output from the light combiner includes at least a portion of 400-700nm wavelength light.

5. The scanning reflective bright field microscope of any one of claims 1 to 4, wherein the sensor coupling filter is positioned between the retarder and the specimen, optionally wherein a second portion of the polarized light is directed towards an absorber.

6. The scanning reflective bright field microscope of any one of claims 1 to 5, further comprises multiple lens assemblies to collimate the light emitted by the multiple LEDs, each lens assembly being positioned between the light combiner and one of the multiple LEDs, optionally wherein the scanning reflective bright field microscope further comprises a monochrome apodizing filter positioned between each of the multiple lens assembles and the light combiner.

7. The scanning reflective bright field microscope of any one of claims 1 to 6, further comprises a focusing assembly positioned between the light combiner and the polarizer, the focusing assembly to convert collimated superimposed light beams from the multiple LEDs into overlapping LED light source images in a back focal plane of an objective lens of the microscope, optionally wherein the scanning reflective bright field microscope further comprises an achromatic apodizing filter positioned between the light combiner and the focusing assembly.

8. The scanning reflective bright field microscope of any one of claims 1 to 7, wherein:

    the multiple LEDs include a first LED, a second LED and a third LED; and
    the light combiner includes a prism combination to combine light output of the first LED, the second LED and the third LED.

9. The scanning reflective bright field microscope of claim 8, wherein the prism combination includes four prisms positioned with their prism apexes in contact at a single point, optionally wherein the prism combination further includes:

    a first surface coated with a first dichroic coating, the first dichroic coating being substantially reflective for emission spectral band of the first LED, and substantially transparent for emission spectral bands of the second LED and the third LED; and
    a second surface coated with a second dichroic coating, the second dichroic coating being substantially reflective for emission spectral band of the third LED,
    and substantially transparent for emission spectral bands of the first LED and the second LED.

10. The scanning reflective bright field microscope of any one of claims 1 to 9, wherein the light combiner includes a polarization-insensitive X-cube.

11. The scanning reflective bright field microscope of any one of claims 1 to 7, wherein:

    the light combiner includes two pairs of optically transparent plates,
    each plate having a first surface with a dichroic coating and a beveled edge extending from the first surface,
    each pair of plates including a first plate and a second plate positioned with their beveled edges in contact with each other to form a "V' shaped structure where the dichroic coating is on an outer side of the "V" shaped structure, and
    the light combiner is formed by positioning the two "V" shaped structures in contact at their base points, optionally wherein:

        the multiple LEDs include a first LED, a second LED and a third LED;
        the dichroic coating on the first surface of the first plate is substantially reflective for emission spectral band of the first LED, and substantially transparent for emission spectral bands of the second LED and the third LED; and
        the dichroic coating on the first surface of the second plate is substantially reflective for emission spectral band of the third LED, and substantially transparent for emission spectral bands of the first LED and the second LED.

12. The scanning reflective bright field microscope of claim 11, wherein each plate has a second surface having an antireflective coating where the antireflective coating is on an inner side of the "V" shaped structure.

13. The scanning reflective bright field microscope of any one of claims 1 to 12 further comprising a control system configured to provide a shutter control signal to the imaging system.

14. The scanning reflective bright field microscope of claim 13, wherein the control system is configured to optimize microscope image intensity by controlling a time delay ($T_{LED}$) between a global shutter open signal and a LED turn-on signal, optionally wherein the time delay ($T_{LED}$) is equal to a time difference between (i) a shutter open delay time ($T_d$) and (ii) a slowest turn-on delay time ($T_{rs}$) of the multiple LEDs.

15. The scanning reflective bright field microscope of claim 14, wherein the LED turn-on signal has a duration ($T_p$) greater than a sum of (i) a pre-determined exposure time ($T_e$) of the imaging system and (ii) the slowest turn-on delay time ($T_{rs}$) of the multiple LEDs; or wherein the LED turn-on signal has a duration ($T_p$) equal to a sum of (i) a pre-determined effective exposure time ($T_{ee}$) of the imaging system and (ii) the slowest turn-on delay time ($T_{rs}$) of the multiple LEDs.

**FIG. 1**

**FIG. 2**

**FIG. 3**

**FIG. 4A**

**FIG. 4B**

FIG. 5A

FIG. 5B

**FIG. 6**

EP 4 597 195 A1

**FIG. 7**

FIG. 8

EP 4 597 195 A1

FIG. 9

FIG. 10A

FIG. 10B

**FIG. 11A**

**FIG. 11B**

Europäisches
Patentamt

European
Patent Office

Office européen
des brevets

## EUROPEAN SEARCH REPORT

**Application Number**

EP 25 15 4079

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 880 377 B1 (SAFRANI AVNER [IL] ET AL) 30 January 2018 (2018-01-30) | 1-8, 13-15 | INV. G02B21/00 |
| Y | * column 4, line 14 - column 12, line 41; claims; figures * | 9-12 | |
| X | WO 2022/158884 A1 (UNIV YONSEI IACF [KR]) 28 July 2022 (2022-07-28) * the whole document * | 1 | |
| X | WO 2017/099755 A1 (UNIV TEXAS [US]) 15 June 2017 (2017-06-15) * paragraph [0022] - paragraph [0103]; figures * | 1 | |
| Y | FRASER EADIE ET AL: "Polarised light modular microscopy (Pol-ModMicro) for identifying hemozoin crystals in Plasmodium", ARXIV.ORG, CORNELL UNIVERSITY LIBRARY, 201 OLIN LIBRARY CORNELL UNIVERSITY ITHACA, NY 14853, 26 April 2023 (2023-04-26), XP091495451, * the whole document * | 9,10 | **TECHNICAL FIELDS SEARCHED (IPC)** G02B |
| Y | US 2004/114236 A1 (SEDLMAYR STEVEN R [US]) 17 June 2004 (2004-06-17) * paragraphs [0220], [0343]; figure 8E * | 11,12 | |

The present search report has been drawn up for all claims

| Place of search | Date of completion of the search | Examiner |
|---|---|---|
| Munich | 25 June 2025 | Politsch, Erich |

EPO FORM 1503 03.82 (P04C01)

## ANNEX TO THE EUROPEAN SEARCH REPORT
## ON EUROPEAN PATENT APPLICATION NO.

EP 25 15 4079

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| US 9880377 | B1 | 30-01-2018 | US | 9880377 B1 | 30-01-2018 |
| | | | WO | 2018047165 A1 | 15-03-2018 |
| WO 2022158884 | A1 | 28-07-2022 | KR | 20220105264 A | 27-07-2022 |
| | | | WO | 2022158884 A1 | 28-07-2022 |
| WO 2017099755 | A1 | 15-06-2017 | NONE | | |
| US 2004114236 | A1 | 17-06-2004 | US | 5903388 A | 11-05-1999 |
| | | | US | 6034818 A | 07-03-2000 |
| | | | US | 6243198 B1 | 05-06-2001 |
| | | | US | 7295371 B1 | 13-11-2007 |
| | | | US | 2002024742 A1 | 28-02-2002 |
| | | | US | 2002154404 A1 | 24-10-2002 |
| | | | US | 2003123148 A1 | 03-07-2003 |
| | | | US | 2004075904 A1 | 22-04-2004 |
| | | | US | 2004075905 A1 | 22-04-2004 |
| | | | US | 2004075906 A1 | 22-04-2004 |
| | | | US | 2004100696 A1 | 27-05-2004 |
| | | | US | 2004100697 A1 | 27-05-2004 |
| | | | US | 2004105151 A1 | 03-06-2004 |
| | | | US | 2004105152 A1 | 03-06-2004 |
| | | | US | 2004114234 A1 | 17-06-2004 |
| | | | US | 2004114235 A1 | 17-06-2004 |
| | | | US | 2004114236 A1 | 17-06-2004 |
| | | | US | 2004114237 A1 | 17-06-2004 |
| | | | US | 2004114238 A1 | 17-06-2004 |
| | | | US | 2004114239 A1 | 17-06-2004 |
| | | | US | 2004114241 A1 | 17-06-2004 |
| | | | US | 2005128586 A1 | 16-06-2005 |
| | | | US | 2006007537 A1 | 12-01-2006 |
| | | | WO | 0068717 A1 | 16-11-2000 |

EPO FORM P0459

For more details about this annex : see Official Journal of the European Patent Office, No. 12/82

**REFERENCES CITED IN THE DESCRIPTION**

**Patent documents cited in the description**

- US 63626340